# EUROPEAN PATENT APPLICATION

(11) **EP 2 998 727 A1**
(43) Date of publication of application: **23.03.2016**
(21) Application number: 15001519.6
(22) Date of filing: 20.05.2015
(51) Int. Cl.: G01N 21/89

(54) **CERAMIC MEMBER AND DEFECT TEST SYSTEM**

(30) Priority: 19.09.2014 US 201414490978
(71) Applicant: Asahi Glass Company, Limited, Tokyo 100-8405 (JP)
(72) Inventor: Yamamoto, Hisao, Tokyo 100-8405 (JP); Saito, Fumiaki, Tokyo 100-8405 (JP); Uchiyama, Taro, Beaverton, Oregon 97008 (US); Lais, Kevin, Hillsboro, Oregon 97123 (US)
(74) Representative: Müller-Boré & Partner Patentanwälte PartG mbB

(57) **Abstract**

A ceramic member (40) includes a housing body (42) made of ceramics provided with a first surface (43A, opposite in the figure to surface 41) set as a measurement base surface extending in an X1 direction and a Y1 direction that is perpendicular to the X1 direction, and an attachment surface (206, 216) to which a member to be attached is fixed, the attachment surface being provided to have a first inclined angle (theta 1a) with respect to the measurement base surface in the X1 direction and a second inclined angle (theta 2a) with respect to the measurement base surface in the Y1 direction.

## Description

### BACKGROUND OF THE INVENTION

### 1. Field of the Invention

The present invention relates to a ceramic member and a defect test system.

### 2. Description of the Related Art

For example, a sheet glass is manufactured by processing molten glass into a glass ribbon with a desired thickness, and then annealing the glass ribbon while transferring the glass ribbon by a transfer roller in a sheet glass manufacturing apparatus. Further, when manufacturing the sheet glass, a test is conducted to detect the existence of defects such as micro flaws or air voids at the surface of or inside the sheet glass. Japanese Laid-open Patent Publication No. H11-337324 discloses such a sheet glass test system, for example.

In such a test system, an inside test area and a surface test area are provided at a transfer direction of a band-shaped sheet glass. Further, at the inside test area, light equipment is provided under the sheet glass and a plurality of cameras are aligned above the sheet glass in a width direction that is perpendicular to the transfer direction. At the surface test area, a light source is provided in the vicinity of the surface of the sheet glass and the cameras are provided diagonally in front of the sheet glass and diagonally in an upward direction of the sheet glass.

As such, the conventional test system has a structure in which one of the cameras is provided at each area. In such a case, in accordance with increase in the size of the sheet glass, the number of cameras necessary for the test also increases. However, as one of the cameras is allocated at each test area, it is difficult to adjust the cameras to have the same imaging condition.

Meanwhile, in accordance with recent increases in performance of an image sensor provided in each of the cameras, the cameras are becoming small and lightweight. With this, it has been studied to decrease a space and increase efficiency for the test system by reducing the number of the cameras.

By reducing the number of cameras, time and steps for adjusting the cameras are saved. Further, in order to increase efficiency in the test steps, a test system has been studied to be developed in which existence of the defect is detected while scanning the surface of the sheet glass by the camera by moving the camera at a high speed.

However, in order to increase the efficiency in the test steps by moving the camera at a high speed, it is required for the housing in which the camera is mounted to have sufficient rigidity while being lightweight. However, it is difficult to actualize the rigidity and lightweightness at the same time when processing a housing made of metal.

### SUMMARY OF THE INVENTION

The present invention is made in light of the above problems, and provides a ceramic member or the like capable of substantially resolving one or more of the above problems.

According to an embodiment, there is provided a ceramic member including a housing body made of ceramics provided with a first surface set as a measurement base surface extending in an X1 direction and a Y1 direction that is perpendicular to the X1 direction, and an attachment surface to which a member to be attached is fixed, the attachment surface being provided to have a first inclined angle with respect to the measurement base surface in the X1 direction and a second inclined angle with respect to the measurement base surface in the Y1 direction.

Further, according to another embodiment, there is provided a defect test system for detecting existence of a defect of a sheet glass provided to extend in an X direction and a Y direction that is perpendicular to the X direction to have a surface of an X-Y plane, the defect test system including the above described ceramic member that is movably provided in the Y direction; a camera attached to the attachment surface of the ceramic member as the member to be attached; and a detecting unit that detects the existence of a defect of the sheet glass based on image data of the X-Y plane of the sheet glass obtained by the camera while the sheet glass is transferred in the X direction and the ceramic member is reciprocated in the Y direction.

### BRIEF DESCRIPTION OF THE DRAWINGS

Other objects, features and advantages of the present invention will become more apparent from the following detailed description when read in conjunction with the accompanying drawings.
Fig. 1 is a side view illustrating a schematic structure of a defect test system that includes a ceramic member of an embodiment;
Fig. 2 is a plan view illustrating a schematic structure of the defect test system that includes the ceramic member of the embodiment;
Fig. 3 is an elevation view illustrating a schematic structure of the defect test system that includes the ceramic member of the embodiment;
Fig. 4 is a side view illustrating an attaching structure of a camera;
Fig. 5 is an elevation view illustrating the attaching structure of the camera;
Fig. 6 is a perspective view illustrating the ceramic member seen from a diagonally upward direction;
Fig. 7 is a perspective view illustrating the ceramic member seen from a diagonally downward direction;
Fig. 8 is a schematic structural view illustrating the ceramic member of an alternative example 1 seen from front;
Fig. 9 is a schematic structural view illustrating the ceramic member of the alternative example 1 seen from side;
Fig. 10 is a schematic structural view illustrating the ceramic member of an alternative example 2 seen from front;
Fig. 11 is a schematic structural view illustrating the ceramic member of the alternative example 2 seen from side; and
Fig. 12 is a vertical cross-sectional view illustrating the ceramic member of the alternative example 2 taken along an A-A line in Fig. 10.

### DETAILED DESCRIPTION OF THE PREFERRED EMBODIMENTS

The invention will be described herein with reference to illustrative embodiments. Those skilled in the art will recognize that many alternative embodiments can be accomplished using the teachings of the present invention and that the invention is not limited to the embodiments illustrated for explanatory purposes.

It is to be noted that, in the explanation of the drawings, the same components are given the same reference numerals, and explanations are not repeated.

As described above, in the test system, it is required for the housing in which the camera is mounted to have sufficient rigidity while being lightweight.

Here, when an attachment direction of the camera on the housing is set such that the imaging range of the camera is directed to the transfer direction of the sheet glass or the width direction that is perpendicular to the transfer direction, test accuracy is lowered because the image obtained by the camera flows in the moving direction of the camera when the camera is moved at a high speed.

Thus, it is required to improve the test accuracy by decreasing the relative speed of the sheet glass and the camera by adjusting the attachment direction of the camera to be inclined with respect to the transfer direction of the sheet glass.

Further, in order to differentiate the defect such as an intrinsic defect or surface flaws from those different from the defect such as dirt adhered to the surface of the sheet glass, thickness variation of the sheet glass and the like, it is necessary to observe the sheet glass by the camera and a light source in different axes directions with inclined angles with respect to the sheet glass.

In other word, the attachment angle of the camera may be inclined with respect to both the transfer direction and the width direction. Here, when it is assumed that the transfer direction of the sheet glass is an X direction and the width direction as a Y direction, the surface (upper surface) of the sheet glass extends in an X-Y plane defined by the X direction and the Y direction. In such a case, an attachment surface of the housing to which the camera is attached may be formed to have a first inclined angle with respect to the X-Y plane in a first cross-section in the X direction and a second inclined angle with respect to the X-Y plane in a second cross-section in the Y direction.

For example, when the housing made of metal is manufactured, it may be possible to form the attachment surface that is inclined with respect to both of the two directions by cutting steel. However, in such a case, the housing becomes very heavy. On the other hand, when the housing is manufactured by a method such as aluminum die-cast or the like, sufficient rigidity cannot be obtained. Thus, in both the cases, sufficient test accuracy cannot be obtained when the housing is moved at a high speed.

Further, if the housing is made of metal, the housing may thermally expand when the housing is positioned near the surface of the large size sheet glass that is still hot, so that an optical axis of the camera cannot be retained to have the predetermined inclined angles.

After cutting the band-shaped (ribbon) sheet glass, each of the cut glass may be tested by the small number of cameras while being mounted on an X-Y stage or a rotary pedestal to be moved or rotated if the size of the cut glass is not large. However, with the recent increase in the size of the panel (cut glass), it is difficult to test the cut glass by this method. Further, the band-shaped (ribbon) sheet glass cannot be tested with this method.

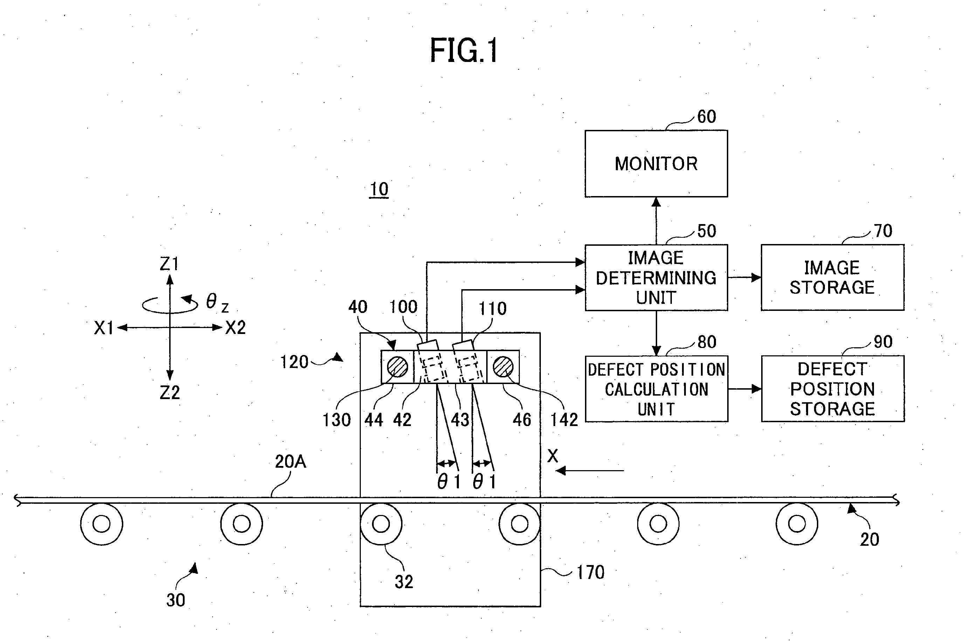

Fig. 1 is a side view illustrating a schematic structure of a defect test system 10 that includes an example of a ceramic member 40 of the embodiment.

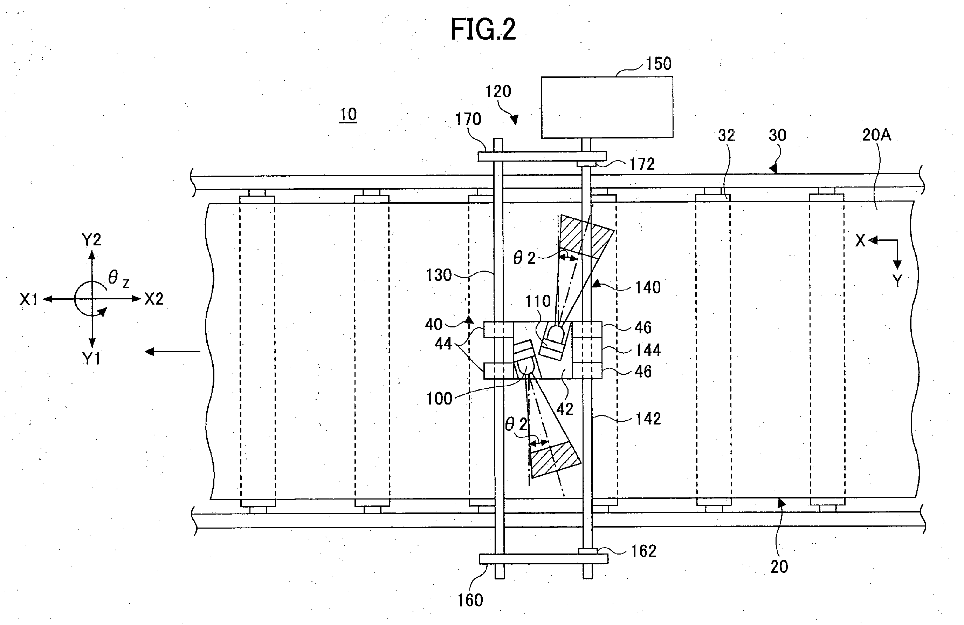

Fig. 2 is a plan view illustrating a schematic structure of the defect test system 10 that includes the ceramic member 40 of the embodiment.

As illustrated in Fig. 1 and Fig. 2, the defect test system 10 is provided at a test area of a transfer path through which a sheet glass 20 is transferred. The sheet glass 20 is transferred in an X direction (transfer direction) by a rotation of transfer rollers 32 of a transfer apparatus 30 to pass through the test area.

The defect test system 10 includes the ceramic member 40, an image determining unit (detecting unit) 50, a monitor 60, an image storage 70, a defect position calculation unit 80 and a defect position storage 90.

The ceramic member 40 includes a housing body 42, a pair of front side arm portions 44 that protrude toward a front side of the housing body 42, and a pair of back side arm portions 46 that protrude toward a back side of the housing body 42. The ceramic member 40 is made of ceramics such as silicon carbide (SiC) or alumina (Al₂O₃), for example. Thus, the ceramic member 40 has high rigidity while being lighter than a member made of metal such as iron or the like. Further, cameras (members to be attached) 100 and 110 are attached to the ceramic member 40. The cameras 100 and 110 are provided above the transfer apparatus 30 to obtain images of an X-Y plane 20A (a surface to be tested formed in the X direction and a Y direction) at a surface of the sheet glass 20. Each of the cameras 100 and 110 includes a lens portion that captures light from the surface of the sheet glass 20 and an image sensor that converts incident light from the lens portion to an image signal.

The housing body 42 is removably provided in the width direction (Y direction) that is perpendicular to the transfer direction (X direction).

Here, one plane may be arbitrarily selected from a plurality of planes of the housing body 42 as a "measurement base surface". The measurement base surface is referred to as an X1-Y1 plane formed by an X1 direction and a Y1 direction that is perpendicular to the X1 direction.

For example, in this embodiment, a bottom surface 43 of the housing body 42 is selected to be set as the measurement base surface. Hereinafter, the bottom surface 43 is referred to as an "X1-Y1 plane 43A". Then, the housing body 42 is provided with attachment surfaces to which the cameras 100 and 110 are attached such that the cameras 100 and 110 are directed to desired directions (angles) with respect to the measurement base surface. The attachment surfaces are explained later in detail.

Image data obtained by the cameras 100 and 110 are provided to the image determining unit 50. The image determining unit 50 detects the existence of a defect of the sheet glass 20 by determining whether there exists light diffusion due to the defect of the sheet glass 20 based on the image data. The image data obtained by the cameras 100 and 110 are transferred to the monitor 60 to be displayed and to the image storage 70 to be stored. When the image determining unit 50 detects the existence of the defect of the sheet glass 20, the detected result is output to the defect position calculation unit 80. The defect position calculation unit 80 calculates the position of the defect (coordinate position in X and Y directions at the X-Y plane 20A of the sheet glass 20) and stores the calculated result in the defect position storage 90.

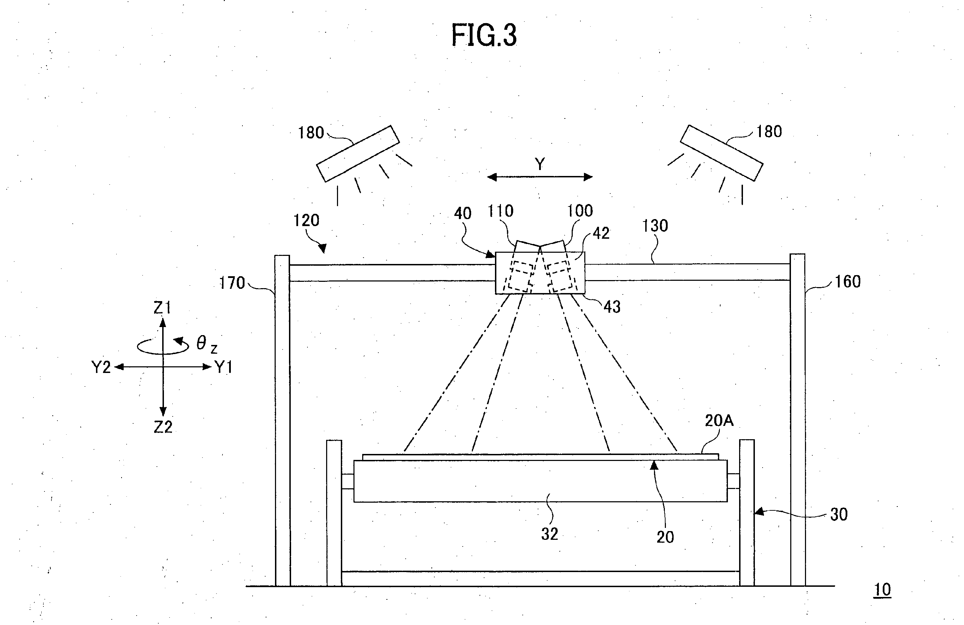

Fig. 3 is an elevation view illustrating a schematic structure of the defect test system 10 that includes the ceramic member 40 of the embodiment.

As illustrated in Fig. 2 and Fig. 3, the defect test system 10 includes a moving device 120 that reciprocates the ceramic member 40 in the Y direction. The moving device 120 includes a guide rail 130 that is bridged in the Y direction over the transfer apparatus 30, a ball screw 140 and a driving device 150. The ball screw 140 includes a threaded shaft 142 that is bridged in the Y direction in parallel with respect to the guide rail 130, and a nut 144 into which the threaded shaft 142 is screwed. The nut 144 has a structure in which balls circulate and are fixed to a side surface of the housing body 42.

The guide rail 130 penetrates the front side arm portions 44 of the ceramic member 40 and is supported by support members 160 and 170 at ends, respectively. The threaded shaft 142 penetrates the back side arm portions 46 of the ceramic member 40 and is screwed with the nut 144 that is fixed to the back side arm portion 44. The threaded shaft 142 is rotatably supported by bearings 162 and 172 that are supported by the support members 160 and 170 at ends, respectively.

One end of the threaded shaft 142 is connected to a motor of the driving device 150 and is rotated by motor torque of the driving device 150. When the rotation direction of the threaded shaft 142 changes, a reciprocating driving force in the Y direction is transmitted to the nut 144. With this configuration, the cameras 100 and 110 mounted on the housing body 42 obtain images of the surface of the sheet glass 20 from different inclined directions at the same time while being reciprocated in the Y direction. The imaging ranges of the cameras 100 and 110 are adjustable by zoom functions of the lens portions (adjustable to a wide angle side or a telephoto side).

When the dimensions of the upper surface of the sheet glass 20, that is an object to be tested, become large, it is necessary for the housing body 42 to move at a high speed. In particular, in order to make the distortion small that is generated when the moving direction of the housing body 42 is changed to an opposite direction, it is desirable that the housing body 42 has a property that the coefficient of elasticity is high and the density is low. For example, in this embodiment, the housing body 42 may be made of ceramics the coefficient of elasticity of which is more than or equal to 200 GPa and the density of which is less than or equal to 5 Mg/m³. In particular, when the sheet glass 20 is for a large size panel such as a liquid crystal display, the housing body 42 may be made of ceramics the coefficient of elasticity of which is more than or equal to 250 GPa and the density of which is less than or equal to 3.5 Mg/m³. Thus, the coefficient of elasticity and the density of the ceramics may be varied in accordance with the size of the object to be tested.

A structure of the ceramic member 40 and the attachment surfaces of the cameras 100 and 110 are explained.

The ceramic member 40 may be formed to have a predetermined shape by introducing slurry made from silicon carbide (SiC) into a mold to be shaped, drying it and baking it.

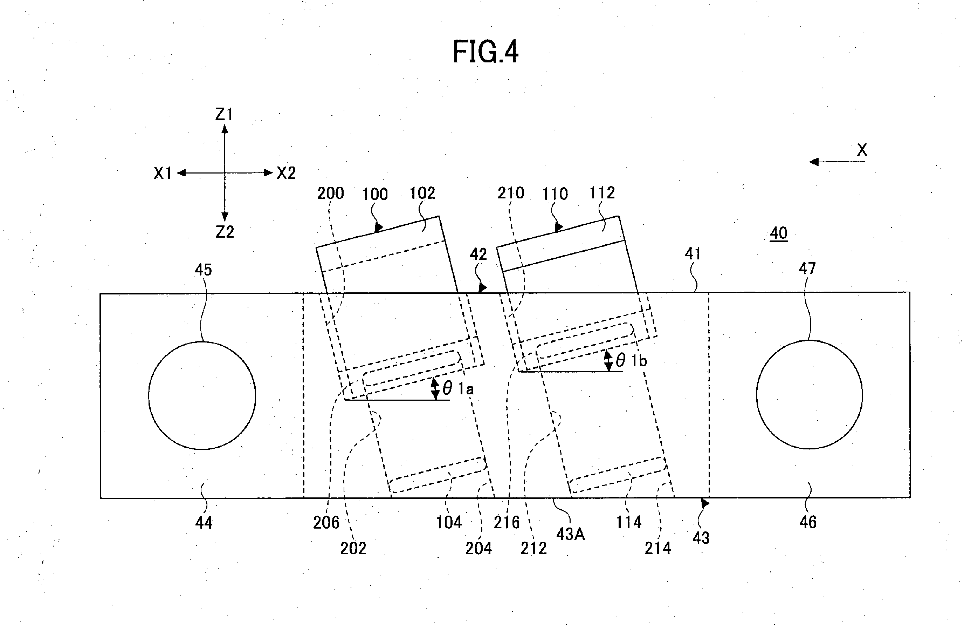

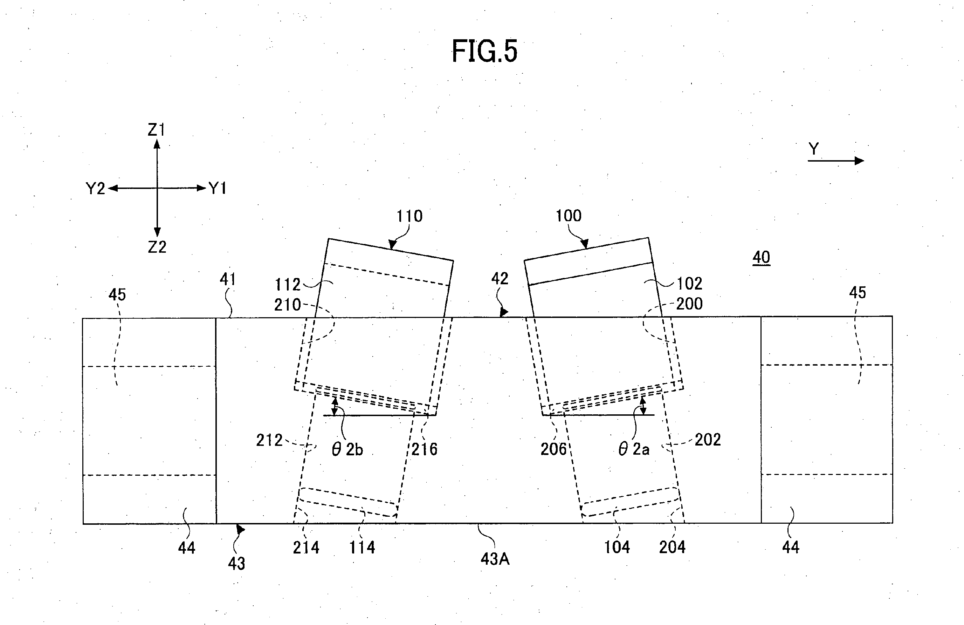

Fig. 4 is a side view illustrating an attachment structure of the cameras 100 and 110. Fig. 5 is an elevation view illustrating the attachment structure of the cameras 100 and 110.

As illustrated in Fig. 4 and Fig. 5, each of the arm portions 44 that protrudes in the forward direction (X direction) of the housing body 42 is provided with a guide hole 45, into which the guide rail 130 is inserted, that penetrates the arm portions 44 in the Y direction. Each of the arm portions 46 that protrudes in the backward direction (X direction) of the housing body 42 is provided with a guide hole 47, into which the threaded shaft 142 of the ball screw 140 is inserted, that penetrates the arm portions 46 in the Y direction.

The housing body 42 of the ceramic member 40 is provided with attachment concave portions 200 and 210 that are open at an upper surface 41 of the housing body 42. The cameras 100 and 110 are inserted in the attachment concave portions 200 and 210, respectively. The attachment concave portions 200 and 210 have a rectangular opening corresponding to the shape of camera bodies 102 and 112 of the cameras 100 and 110, respectively. The attachment concave portions 200 and 210 extend to be inclined in directions corresponding to the imaging directions of the cameras 100 and 110.

Further, inside the attachment concave portions 200 and 210, there are attachment surfaces 206 and 216 at which the cameras 100 and 110 are fixed and insertion holes 202 and 212 through which lens portions 104 and 114 of the cameras 100 and 110 are inserted, respectively. Lower ends of the insertion holes 202 and 212 are in communication with lower open portions 204 and 214 that are open at the bottom surface 43 of the housing body 42, respectively. In each of the insertion holes 202 and 212, a cross-sectional plane having a circular shape is formed in a perpendicular direction of an axis direction. The insertion holes 202 and 212 are in communication with the attachment concave portions 200 and 210 at upper ends and in communication with the lower open portions 204 and 214 at lower ends, respectively.

Inside the attachment concave portions 200 and 210, step portions are provided to surround the upper ends of the insertion holes 202 and 212, respectively. Planes formed by the step portions to surround the insertion holes 202 and 212 are the attachment surfaces 206 and 216 of the cameras 100 and 110, respectively.

As described above, in this embodiment, the bottom surface 43 of the housing body 42 is selected to be set as the measurement base surface and is referred to as the "X1-Y1 plane 43A". Here, the X1-Y1 plane 43A is in parallel with respect to the X-Y plane 20A (the surface of the sheet glass 20).

The attachment surface 206 is formed to have a first inclined angle θ1a with respect to the X1-Y1 plane 43A in the X1 direction and a second inclined angle θ2a with respect to the X1-Y1 plane 43A in the Y1 direction. Similarly, the attachment surface 216 is formed to have a third inclined angle θ1b with respect to the X1-Y1 plane 43A in the X1 direction and a fourth inclined angle θ2b with respect to the X1-Y1 plane 43A in the Y1 direction.

Each of the first to the fourth inclined angles θ1a, θ2a, θ1b and θ2b may be set at a desired angle within a range of 1° to 89° in accordance with the imaging ranges (angles of view) of the cameras 100 and 110. Here, the combination of the angles θ1a and θ2a for the attachment surface 206 and the combination of the angles θ1b and θ2b for the attachment surface 216 may be set differently so that the directing angles of the attachment surfaces 206 and 216 become different from each other.

The imaging directions of the cameras 100 and 110 are determined when end surfaces of step portions having a rectangular shape of the camera bodies 102 and 112 contact the attachment surfaces 206 and 216, respectively. The attachment surfaces 206 and 216 may be accurately formed to have the inclined angles θ1a and θ2a, and θ1b and θ2b by setting the bottom surface 43 of the housing body 42 as the measurement base surface in manufacturing the ceramic member 40 by a ceramic material. Although the ceramic member 40 shrinks after being baked, as the ceramic member 40 shrinks equally in all directions, the attachment angles (inclined angles θ1a and θ2a and θ1b and θ2b with respect to the X1-Y1 plane 43A as the measurement base surface in the X1 direction and in the Y1 direction) of the attachment surfaces 206 and 216 do not change.

As the attachment directions of the cameras 100 and 110 are determined by the attachment surfaces 206 and 216, the attachment directions are defined by two inclined angles θ1a and θ2a, and θ1b and θ2b, with respect to the horizontal plane (X-Y plane), respectively. The cameras 100 and 110 attached to the attachment surfaces 206 and 216 of the housing body 42 as described above are capable of obtaining an image of the surface of the sheet glass 20 that is transferred in the X direction from a diagonally upward direction while being reciprocated in the Y direction with the housing body 42. Further, the cameras 100 and 110 may be provided to face different directions around a vertical direction (Z direction) along an circumferential direction (θz direction) so that the image of the sheet glass 20 can be obtained from left and right diagonal directions.

When the defect exists in the sheet glass 20, it is sometimes difficult to detect the defect depending of the shape of the defect or the size of the defect. However, according to the present embodiment, light diffusion due to the defect can be surely detected by obtaining the image from two different directions by the cameras 100 and 110. Thus, test accuracy of detecting the defect based on the image data obtained by the cameras 100 and 110 is improved. Further, when the cameras 100 and 110 are reciprocated in the Y1 and Y2 directions while obtaining images, the entire surface of the sheet glass 20 that is transferred in the X1 direction can be effectively tested.

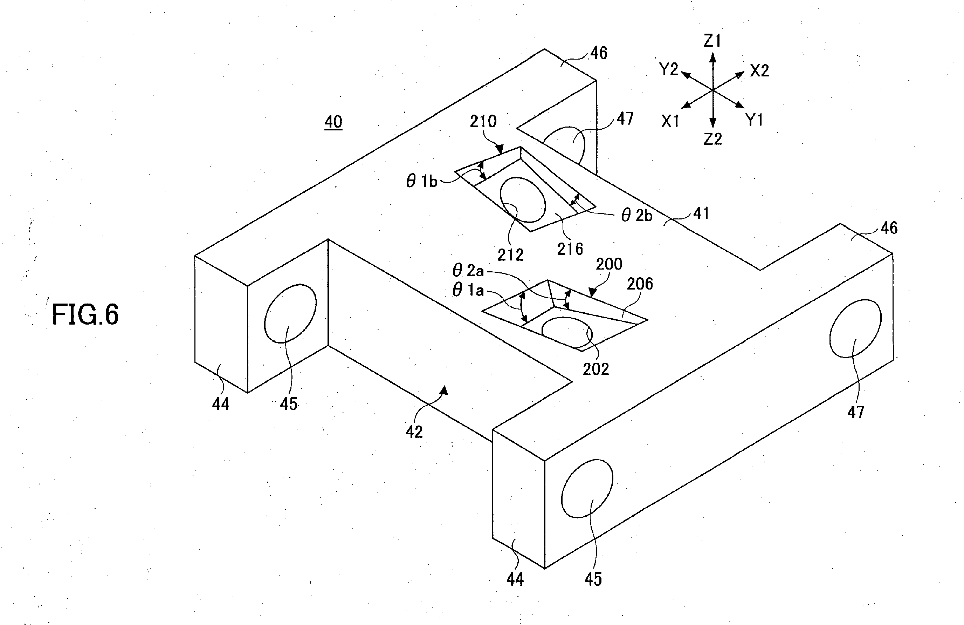

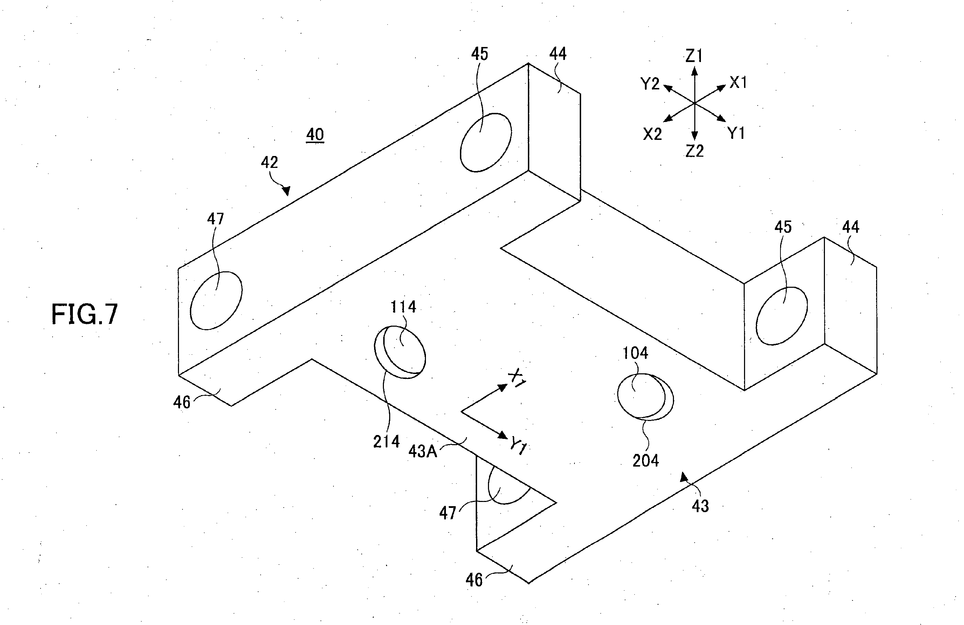

Fig. 6 is a perspective view illustrating the ceramic member 40 seen from a diagonally upward direction. Fig. 7 is a perspective view illustrating the ceramic member 40 seen from a diagonally downward direction.

As illustrated in Fig. 6 and Fig. 7, the ceramic member 40 has a structure such that the attachment concave portions 200 and 210, each having a rectangular shape, are open at the upper surface 41 of the housing body 42. Further, the lower open portions 204 and 214, each having a circular shape, are open at the bottom surface 43 of the housing body 42. The attachment surfaces 206 and 216, to which the camera bodies 102 and 112 of the cameras 100 and 110 are attached, are provided inside the attachment concave portions 200 and 210, respectively.

In this embodiment, the X1-Y1 plane 43A, that is the bottom surface 43 of the housing body 42 and is the measurement base surface, is in parallel with respect to the X-Y plane 20A, that is the surface of the sheet glass 20 (surface to be tested) and is observed by the cameras 100 and 110. Further, the attachment surfaces 206 and 216 are formed to have the first inclined angle θ1a and the third inclined angle θ1b with respect to the X1-Y1 plane 43A in the X1 direction, and the second inclined angle θ2a and the fourth inclined angle θ2b with respect to the X1-Y1 plane 43A in the Y1 direction.

If such a complicated attachment structure, in which the attachment surfaces 206 and 216 with the inclined angles θ1a and θ2a, and θ1b and θ2b are provided in the attachment concave portions 200 and 210, is formed by machining a solid ceramic block with high hardness, a large amount of processing time is required which results in high cost. Thus, in particular for a large size ceramic member, it is difficult to manufacture the structure by machining using the ceramics block.

However, according to this embodiment, the above described attachment surfaces 206 and 216 having the respective desired inclined angles θ1a and θ2a, and θ1b and θ2b with respect to the X1-Y1 plane 43A as the measurement base surface can be accurately formed by preparing a mold shape used when shaping the ceramic member 40 or adjusting the shape when shaping. The ceramic member 40 can be made lighter than a member made of metal as well as having a sufficient rigidity more than or equal to the member made of metal. Further, according to the ceramic member 40, the attachment surfaces 206 and 216 having the respective desired inclined angles θ1a and θ2a, and θ1b and θ2b can be accurately formed.

Thus, according to the defect test system 10 of the embodiment, the ceramic member 40 on which the cameras 100 and 110 are mounted can have sufficient rigidity while being lightweight. Thus, the test steps can be performed at a high speed while improving the test accuracy.

In this embodiment, an example is explained in which two of the cameras 100 and 110 are provided in the housing body 42. However, the number of cameras is not limited to two and more than two cameras may be provided.

The ceramic member 40 is not limited to the above structure and an optical measurement device (a laser interferometer, a light source or the like, for example) other than the camera may be attached to the bottom surface 43, the upper surface 41, the side surface of the housing body 42 or the like.

Further, the measurement base surface it not limited to the bottom surface 43 of the housing body 42, and may be the upper surface 41 or the side surface of the housing body 42, for example.

Further, in the above embodiment, an example is explained in which the attachment surfaces 206 and 216 are provided in the ceramic member 40 for attaching the cameras 100 and 110, respectively. A member to be attached such as an optical measurement device other than the camera may be attached to the attachment surfaces 206 and 216.

Further, although the structure including the guide rail 130 and the ball screw 140 is exemplified as the moving device 120 that moves the ceramic member 40, another drive system (a timing belt, a linear motor or the like) may be used.

Further, although the ceramic member 40 including the housing body 42 and the pair of the arm portions 44 and 46 is exemplified, another ceramic member having a different structure or a different shape may be used.

### [Alternative example 1]

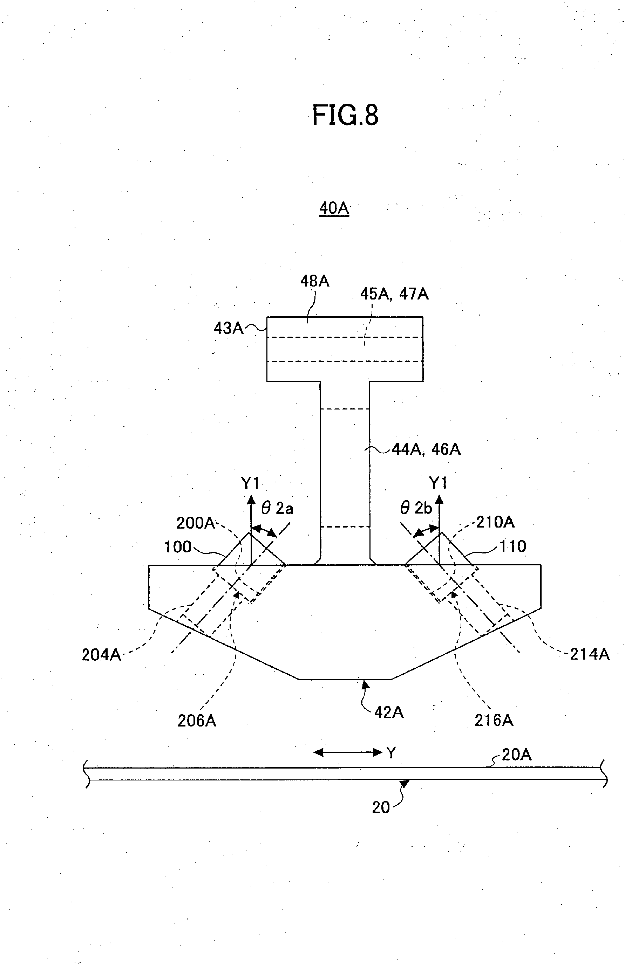

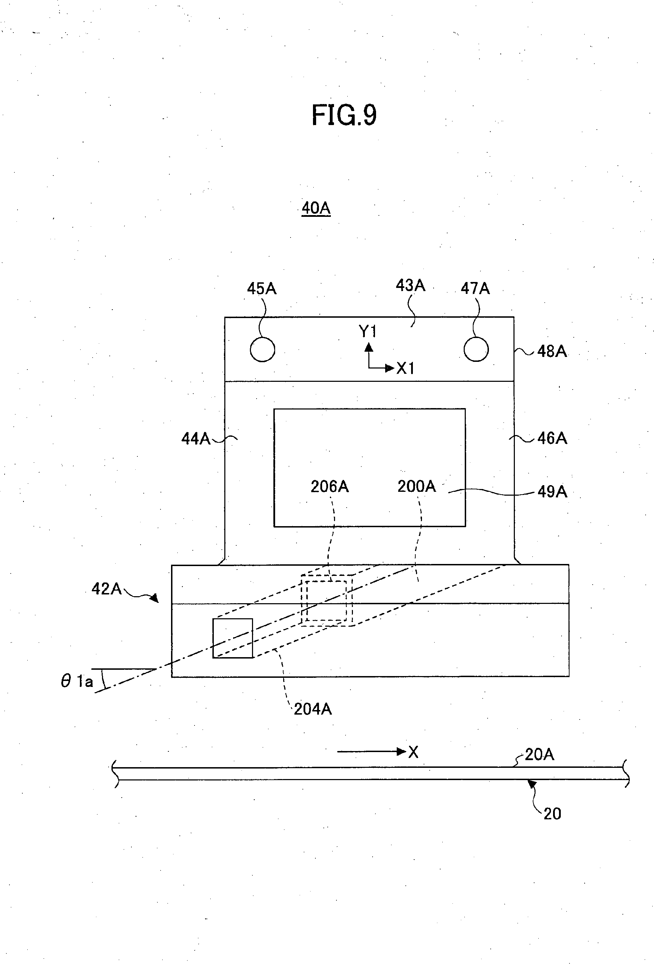

Fig. 8 is a schematic structural view illustrating a ceramic member 40A of an alternative example 1 seen from front. Fig. 9 is a schematic structural view illustrating the ceramic member 40A of the alternative example 1 seen from side.

As illustrated in Fig. 8 and Fig. 9, the ceramic member 40A of the alternative example 1 includes a housing body 42A, a housing upper portion 48A provided with guide holes 45A and 47A and a pair of arm portions 44A and 46A provided to extend in an upper-lower direction.

The ceramic member 40A has a structure in which the housing upper portion 48A is provided above the housing body 42A to be spaced away from the housing body 42A, and the housing body 42A and the housing upper portion 48A are connected by the arm portions 44A and 46A. In other words, in order to lighten the ceramic member 40A, a rectangular open portion 49A is provided between the arm portions 44A and 46A.

As such, the housing upper portion 48A provided with the guide holes 45A and 47A into which the guide rail 130 and the ball screw 140 are inserted, respectively, is provided above the housing body 42A to be spaced away from the housing body 42A. Thus, the guide rail 130 and the ball screw 140 can be also spaced away from the sheet glass 20. Therefore, even when the surface temperature of the sheet glass 20 is relatively high, deformation of the guide rail 130 and the ball screw 140 due to thermal expansion can be prevented.

Further, in the ceramic member 40A of the example, one of vertical surfaces, left and right side surfaces, of the housing upper portion 48A is selected to be set as the "X1-Y1 plane 43A" as the measurement base surface. It means that in this alternative example 1, a plane that is perpendicular to the X-Y plane 20A of the surface of the sheet glass 20 (surface to be tested) is defined as the X1-Y1 plane 43A.

Specifically, in the ceramic member 40A of the example, one of the left and right side surfaces of the housing upper portion 48A is set as the X1-Y1 plane 43A as the measurement base surface. When the housing body 42A is reciprocated, position of the housing body 42A can be accurately calculated by detecting the distance to the X1-Y1 plane 43A of the moving housing body 42A by an optical distance sensor provided at side.

Similar to the above embodiment, the housing body 42A is provided with attachment concave portions 200A and 210A for holding the cameras 100 and 110, respectively. Further, attachment surfaces 206A and 216A to which the cameras 100 and 110 are attached are provided inside the attachment concave portions 200A and 210A, respectively.

As described above, in this embodiment, one of the side surfaces 43 of the housing upper portion 48A is selected to be set as the measurement base surface and is referred to as the "X1-Y1 plane 43A". Here, the X1-Y1 plane 43A is perpendicular to the X-Y plane 20A (the surface of the sheet glass 20).

In this embodiment, the attachment surface 206A is formed to have a first inclined angle θ1a with respect to the X1-Y1 plane 43A in the X1 direction and a second inclined angle θ2a with respect to the X1-Y1 plane 43A in the Y1 direction. Similarly, the attachment surface 216 is formed to have a third inclined angle θ1b with respect to the X1-Y1 plane 43A in the X1 direction and a fourth inclined angle θ2b with respect to the X1-Y1 plane 43A in the Y1 direction.

Although an example is explained in which the cameras 100 and 110 are attached to the attachment surfaces 206A and 216A, an optical measurement device such as an infrared camera, a laser interferometer, a light source or the like maybe attached to the attachment surfaces 206A and 216A.

In the alternative example 1, it is desirable that the coefficient of thermal expansion of the housing body 42A be small because errors in distances from the X1-Y1 plane 43A as the measurement base surface to the cameras 100 and 110 become small so that more accurate measurement can be performed when the coefficient of thermal expansion of the housing body 42A is small. The coefficient of linear expansion of the housing body 42A may be less than or equal to 8 × 10⁻⁶ /K. Further, when the object to be tested is for a liquid crystal panel where it is necessary to detect a position of a very small defect with a high degree of accuracy, the coefficient of linear expansion of the housing body 42A may be less than or equal to 5 × 10⁻⁶ /K. For such a ceramic material for the housing body 42A, mullite, silicon nitride (Si₃N₄) and the like may be used.

### [Alternative example 2]

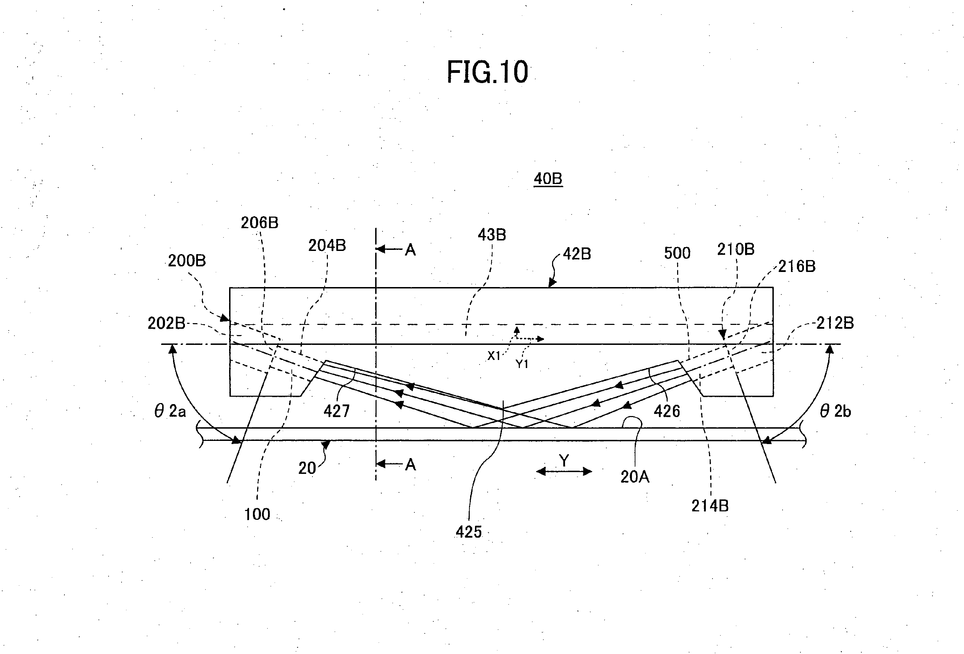

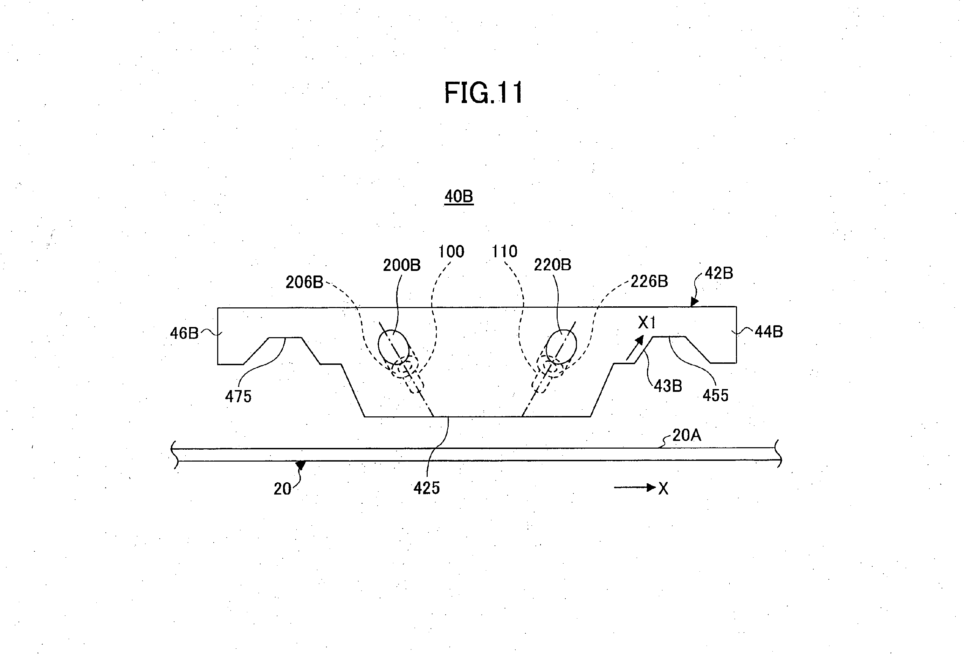

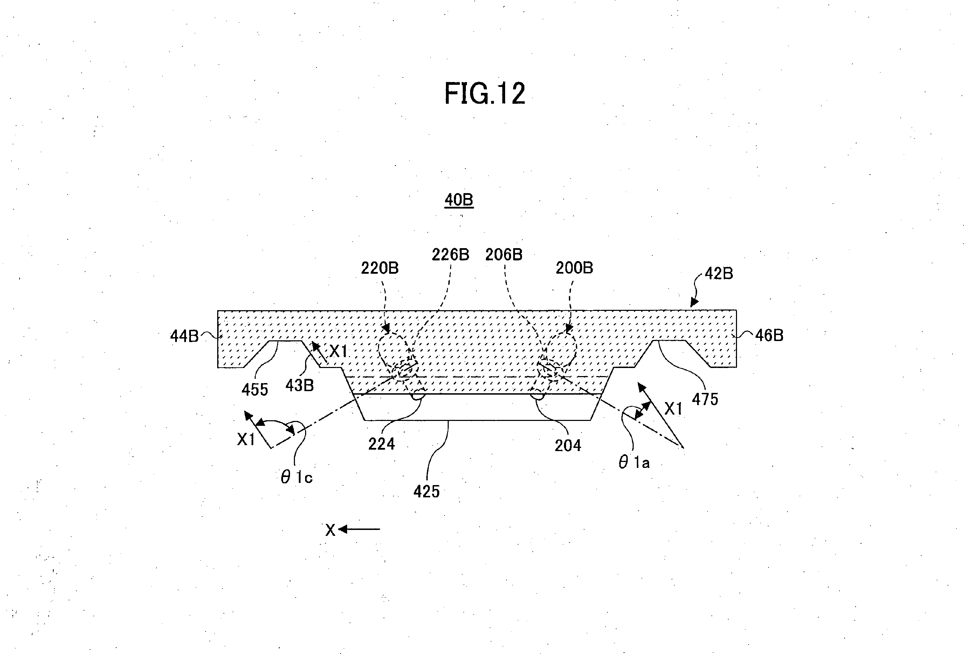

Fig. 10 is a schematic structural view illustrating a ceramic member 40B of an alternative example 2 seen from front. Fig. 11 is a schematic structural view illustrating the ceramic member 40B of the alternative example 2 seen from left side. Fig. 12 is a cross-sectional view illustrating the ceramic member 40B taken along an A-A line in Fig. 10.

As illustrated in Fig. 10 to Fig. 12, the ceramic member 40B of the alternative example 2 includes a housing body 42B and support portions 44B and 46B, in which guide grooves 455 and 475 for linear guides are formed to extend, at lower portions of the housing body 42B at left and right sides. The guide grooves 455 and 475 are formed to have a trapezoidal shape corresponding to a protruding shape of linear guides (not illustrated in the drawings). The ceramic member 40B is guided in a moving direction (Y direction) that is perpendicular to the transfer direction (X direction) by engaging the linear guides.

The cameras 100 and 110 and a light source 500 (one of the light sources 500 is not illustrated in the drawings) for detecting the defect are inserted in the attachment concave portions 200B, 220B and 210B of the housing body 42B, and fixed to the attachment surfaces 206B, 226B and 216B formed in the attachment concave portions 200B, 220B and 210B, respectively.

As the cameras 100 and 110 and the light source 500 are fixed to the attachment surfaces 206B, 226B and 216B, the cameras 100 and 110 and the light source 500 are retained at predetermined inclined angles with respect to the surface of the sheet glass 20 (surface to be tested) for testing the sheet glass 20 from diagonally upward left and right directions (Y direction).

Further, a diffusion shielding portion 425 that protrudes downward is provided at a bottom center portion of the housing body 42B. The diffusion shielding portion 425 is provided to have a function of preventing entering of the diffusion in optical paths of the light irradiated from the light source 500 provided at one side in the Y direction (right side in Fig. 10) and reflected toward the camera 100 provided at another side in the Y direction (at the attachment surface 206B, left side in Fig. 10). The diffusion shielding portion 425 has inclined surfaces 426 and 427 that extend along optical paths of the light source 500 and the camera 100. The inclined surfaces 426 and 427 shield the ambient light not to enter the optical paths of the light source 500 and the camera 100.

Further, a combination of the light source 500 and the camera 110 is provided in an opposite direction in the left and right direction (Y direction) from that of the combination of the light source 500 and the camera 100. Thus, the cameras 100 and 110 can test the sheet glass 20 from 180 degree opposite directions.

As such, the ceramic member 40B has a structure in which the light from the light sources 500 irradiates the surface of the sheet glass 20 with a slight angle and the cameras 100 and 110 positioned at different directions from the optical axes of the light sources 500 can detect the reflection of the defect of the sheet glass 20. For example, when the sheet glass 20 is relatively thin such as for a touch panel, in order to differentiate the defect in the glass from an adhesion at the surface, the angles of the cameras 100 and 110 and the light sources 500 may be slight such as to be closer to the horizontal direction.

The cameras 100 and 110 and the light source 500 are fixed to the attachment surfaces 206B, 226B and 216B while being inserted in the attachment concave portions 200B, 220B and 210B. In the housing body 42B of the alternative example 2, each of the attachment concave portions 200B, 220B and 210B may be formed such that the penetrating direction with respect to the X-Y plane 20A of the surface of the sheet glass 20 is relatively closer to the horizontal direction. Thus, the light from the light sources 500 can be irradiated from almost the side in the Y direction and it is easy to detect the defect formed at the X-Y plane 20A of the sheet glass 20.

In this alternative example 2, in the ceramic member 40B, one of inclined surfaces provided at inner sides and outer sides of the guide grooves 455 and 475 of the trapezoidal shape concave portions (the inclined surface provided at the inner side of the guide groove 455, for example) is selected to be set as the measurement base surface and is referred to as an "X1-Y1 plane 43B". Here, the X1-Y1 plane 43B is inclined 45° with respect to the X-Y plane 20A (the surface of the sheet glass 20).

The attachment surfaces 206B, 216B and 226B are formed to have inclined angles θ1a, θ1b and θ1c with respect to the X1-Y1 plane 43B in the X1 direction and inclined angles θ2a, θ2b and θ2c with respect to the X1-Y1 plane 43B in the Y1 direction. The cameras 100 and 110, the light source 500 and the like may be attached to the attachment surfaces 206B, 216B and 226B.

The inclined angles θ1a and θ1c of the attachment surfaces 206B and 226B illustrated in Fig. 12 are angles with respect to the X1-Y1 plane 43B in the X1 direction. The inclined angles θ2a and θ2b illustrated in Fig. 10 are angles with respect to the X1-Y1 plane 43B in the Y1 direction.

In this alternative example 2, the position of the micro defect can be more accurately detected when the temperature of the entire housing body 42B is even. Thus, the housing body 42B may be made of a material whose coefficient of thermal conductivity at 100 °C is more than or equal to 40 W/(m·K). Further, when the object to be tested is for a liquid crystal panel for which it is necessary to detect the positions of small defects, the housing body 42B may be made of a material whose coefficient of thermal conductivity at 100 °C is more than or equal to 80 W/(m·K). For such a material, ceramics such as silicon carbide (SiC), silicon nitride (Si₃N₄) and the like may be used.

According to the embodiment, the housing body to which a member to be attached is fixed can have the rigidity while being lightweight. Further, the test accuracy of the defect test can be increased.

Although a preferred embodiment of the ceramic member and the defect test system has been specifically illustrated and described, it is to be understood that minor modifications may be made therein without departing from the spirit and scope of the invention as defined by the claims.

The present invention is not limited to the specifically disclosed embodiments, and numerous variations and modifications may be made without departing from the spirit and scope of the present invention.

## Claims

1. A ceramic member comprising:
a housing body made of ceramics provided with
a first surface set as a measurement base surface extending in an X1 direction and a Y1 direction that is perpendicular to the X1 direction, and
an attachment surface to which a member to be attached is fixed, the attachment surface being provided to have a first inclined angle with respect to the measurement base surface in the X1 direction and a second inclined angle with respect to the measurement base surface in the Y1 direction.

2. The ceramic member according to claim 1,
wherein the housing body is further provided with a second surface that is not perpendicular to the measurement base surface and the attachment surface.

3. The ceramic member according to any one of the preceding claims,
wherein the attachment surface is formed at an inside surface of a concave portion provided in the housing body.

4. The ceramic member according to any one of the preceding claims,
wherein the housing body is provided with an insertion hole through which a part of the member to be attached is inserted, the insertion hole being in communication with the concave portion and extending from the attachment surface.

5. The ceramic member according to any one of the preceding claims,
wherein the housing body is further provided with a plurality of the attachment surfaces, the plurality of the attachment surfaces being provided to face different directions.

6. The ceramic member according to any one of the preceding claims,
wherein the member to be attached is an optical measurement device.

7. A defect test system for detecting existence of a defect of a sheet glass provided to extend in an X direction and a Y direction that is perpendicular to the X direction to have a surface of an X-Y plane, the defect test system comprising:
the ceramic member according to claim 1 that is movably provided in the Y direction;
a camera attached to the attachment surface of the ceramic member as the member to be attached; and
a detecting unit that detects the existence of a defect of the sheet glass based on image data of the X-Y plane of the sheet glass obtained by the camera while the sheet glass is transferred in the X direction and the ceramic member is reciprocated in the Y direction.

8. The defect test system according to claim 7, wherein an X1-Y1 plane defined by the X1 direction and the Y1 direction is in parallel with respect to the X-Y plane.

9. The defect test system according to claim 7 or 8,
wherein an X1-Y1 plane defined by the X1 direction and the Y1 direction is perpendicular to the X-Y plane.
